# FASCICULE DE BREVET EUROPEEN

(11) **EP 3 710 687 B1**
(45) Date de publication et mention de la délivrance du brevet: **29.12.2021**
(21) Numéro de dépôt: 18819320.5
(22) Date de dépôt: 15.11.2018
(51) Int. Cl.: F02K 1/72, F02K 1/76

(54) **INVERSEUR DE POUSSÉE À GRILLES MOBILES POUR ENSEMBLE PROPULSIF D'AÉRONEF ET PROCÉDÉS DE MONTAGE ET DÉMONTAGE S'Y RAPPORTANT**
KASKADENARTIGE SCHUBUMKEHRVORRICHTUNG MIT BEWEGLICHEN FLÜGELN FÜR EIN FLUGZEUGTRIEBWERK UND ZUGEHÖRIGE MONTAGE- UND DEMONTAGEVERFAHREN
CASCADE-TYPE THRUST REVERSER WITH MOBILE VANES FOR AN AIRCRAFT PROPULSION ASSEMBLY, AND ASSOCIATED ASSEMBLY AND DISMANTLING METHODS

(30) Priorité: 16.11.2017 FR 1760823
(43) Date de publication de la demande: 23.09.2020
(73) Titulaire: Safran Nacelles, 76700 Gonfreville-l'Orcher (FR)
(72) Inventeur: CARUEL, Pierre, 76700 Gonfreville L'Orcher (FR); PEYRON, Vincent, 76700 Gonfreville L'Orcher (FR)
(74) Mandataire: Germain Maureau
(86) Numéro de dépôt international: PCT/FR2018/052852
(87) Numéro de publication internationale: WO 2019/097170

(56) Documents cités:
- FR-A1- 2 995 637
- FR-A1- 3 031 726
- FR-A1- 3 031 728

## Description

La présente invention se rapporte au domaine des ensembles propulsifs d'aéronef, notamment des ensembles propulsifs d'avion comprenant une nacelle et un moteur de type turboréacteur à double flux. Plus spécifiquement, la présente invention concerne un inverseur de poussée à grilles mobiles pour de tels ensembles propulsifs ainsi que des procédés de démontage et de montage ou remontage permettant de réaliser des opérations de maintenance sur le moteur déposé.

Un inverseur de poussée à grilles permet de faire passer l'ensemble propulsif d'une configuration de croisière, dite en « jet direct », à une configuration d'inversion de poussée, dite en « jet inverse ». Dans la configuration en jet inverse, une partie du flux d'air est redirigée vers l'amont de l'ensemble propulsif au travers de grilles aussi appelées « grilles de déviation » dans le présent document.

Dans un inverseur de poussée à grilles mobiles, le passage de la configuration en jet direct à la configuration en jet inverse est réalisé par translation simultanée du capot mobile de l'inverseur de poussée et des grilles de déviation.

Le document FR 2 999 239 A1 montre un ensemble propulsif d'avion doté d'un inverseur de poussée à grilles mobiles. Le document FR 3 031 728 A1 montre également un ensemble propulsif d'aéronef avec inverseur de poussée à grilles mobiles.

Dans l'état de la technique antérieure, il est connu de réaliser la translation des grilles de déviation par l'intermédiaire de rails solidaires du moteur. Ces rails de grilles forment une liaison glissière avec des coulisseaux respectifs solidaires des grilles de déviation. Afin d'assurer une bonne reprise des efforts mécaniques générés par la translation des grilles de déviation, il est connu de disposer les rails :
- en position dite à « 12 heures », de part et d'autre du mât réacteur reliant la nacelle à la voilure de l'avion, et
- radialement entre la paroi interne et la paroi externe du capot mobile de l'inverseur de poussée.

Pour permettre ou faciliter les opérations de maintenance sur le moteur, le capot mobile est typiquement réalisé sous la forme de deux demi-capots articulés au mât réacteur de la nacelle par des charnières. Le capot mobile peut ainsi être placé dans une position de maintenance par pivotement des demi-capots par rapport au mât réacteur de manière à ouvrir les demi-capots.

Certaines opérations de maintenance nécessitent d'extraire le moteur de la nacelle. L'extraction est généralement réalisée par translation verticale du moteur et d'éléments solidarisés au moteur, notamment les grilles de déviation et les rails de grilles. Cette translation s'effectue vers le bas relativement au mât réacteur situé vers le haut. Les rails de grilles étant disposés radialement entre la paroi interne et la paroi externe du capot mobile de l'inverseur de poussée, une telle extraction fait entrer en collision les rails de grilles avec le capot mobile ce qui peut endommager ces différents éléments.

La présente invention vise notamment à éviter une telle collision et propose à cet effet un inverseur de poussée, un ensemble propulsif d'aéronef ainsi que des procédés de démontage et de montage ou remontage tels que décrits ci-dessous.

Selon un aspect, l'invention concerne un inverseur de poussée pour ensemble propulsif d'aéronef à moteur. Cet inverseur de poussée comprend deux poutres comprenant chacune un rail de poutre et des charnières. L'inverseur comprend aussi deux demi-capots respectivement reliés aux rails de poutre suivant une liaison glissière autorisant une translation des demi-capots, relativement aux poutres, entre une position de croisière et une position d'inversion de poussée. Les poutres sont agencées pour être reliées par leurs charnières respectives à un mât réacteur de l'ensemble propulsif suivant une liaison pivot autorisant une rotation des rails de poutre et des demi-capots correspondants entre une position fermée et une position de maintenance dans laquelle les demi-capots sont ouverts. L'inverseur comprend aussi des grilles de déviation et des rails de grilles. Les grilles de déviation sont reliées aux rails de grilles suivant une liaison glissière autorisant une translation des grilles de déviation entre une position de croisière et une position d'inversion de poussée, la position de croisière et la position d'inversion de poussée des grilles de déviation étant définies relativement aux poutres. L'inverseur comprend aussi des moyens de fixation amovibles agencés pour relier de manière amovible l'un au moins des rails de grilles au moteur par encastrement.

Par « amovible » on entend qui peut être retiré, et en particulier qui peut être retiré sans détérioration. Des moyens de fixation amovibles sont donc des moyens de fixation qui peuvent être retirés puis réutilisés, en l'occurrence pour relier l'un au moins des rails de grilles au moteur.

Par « encastrement » on entend une liaison mécanique complète empêchant tout mouvement relatif des pièces ainsi reliées. Ainsi, des moyens de fixation reliant un ou des rails de grilles au moteur par encastrement empêchent tout mouvement relatif du ou des rails de grilles par rapport au moteur.

Un tel inverseur facilite les opérations de maintenance sur le moteur nécessitant sa dépose de l'aéronef grâce à l'amovibilité des moyens de fixation. Ces derniers peuvent en effet être retirés pour positionner les rails de grilles de manière à éviter leur collision avec les demi-capots lors de l'extraction simultanée du moteur et des grilles de déviation et, le cas échéant, des rails de grilles. Lors du remontage, ces moyens de fixation peuvent être réutilisés.

Dans un mode de réalisation, l'inverseur de poussée peut comprendre deux rails de grilles agencés pour être positionnés, lorsque l'inverseur est assemblé à l'ensemble propulsif, de part et d'autre du mât réacteur. Dans ce mode de réalisation, les moyens de fixation peuvent être agencés pour relier de manière amovible l'un ou les deux rails de grilles au moteur par encastrement.

La liaison d'un ou plusieurs rails de grilles au moteur peut être réalisée par encastrement sur un carter de soufflante de l'ensemble propulsif.

Dans un mode de réalisation, l'inverseur de poussée est agencé de sorte que, lorsque les moyens de fixation sont retirés, ladite liaison glissière reliant les grilles de déviation et les rails de grilles autorise une translation des rails de grilles, relativement aux grilles de déviation et aux poutres, entre une position de fixation et une position avancée. Lorsque les rails de grilles sont dans la position de fixation, les rails de grilles peuvent être reliés au moteur par les moyens de fixation.

Dans ce mode de réalisation, l'inverseur de poussée peut comprendre en outre un ou plusieurs détrompeurs reliés à un rail de grilles respectif et agencés pour interférer avec un composant de l'ensemble propulsif de manière à empêcher l'assemblage de ce composant avec l'ensemble propulsif lorsque l'un au moins des rails de grilles est dans la position avancée. Ledit composant de l'ensemble propulsif peut être un carénage du mât réacteur ou du carter de soufflante.

Un tel détrompeur permet d'empêcher un assemblage dudit composant si les rails de grilles ne sont pas positionnés correctement, garantissant un bon positionnement des rails de grilles avant finalisation de l'opération de maintenance.

Dans un mode de réalisation, l'inverseur de poussée peut comprendre au moins une bielle agencée pour relier les rails de grilles entre eux de manière à reprendre des efforts mécaniques exercés sur les rails de grilles par les grilles de déviation dans une direction normale, ou sensiblement normale, aux rails de grilles, en particulier lorsque les grilles de déviation sont en position d'inversion de poussée.

Dans ce mode de réalisation, l'inverseur de poussée comporte des moyens de fixation de bielle amovibles agencés pour relier la bielle aux rails de grilles.

L'au moins une bielle peut constituer avec chaque rail de grilles auquel elle est reliée une liaison rotule.

Alternativement, elle peut être reliée aux rails de grilles par encastrement.

Plus généralement, l'au moins une bielle peut constituer avec chaque rail de grilles auquel elle est reliée une liaison mécanique dotée d'un nombre choisi de degrés de liberté.

Ainsi, dans un mode de réalisation les moyens de fixation de bielle sont des moyens de liaison rotule.

Dans un autre mode de réalisation les moyens de fixation de bielle sont des moyens de liaison par encastrement.

Plus généralement les moyens de fixation de bielle sont des moyens de liaison mécanique dotée d'un nombre choisi de degrés de liberté.

L'invention concerne aussi un ensemble propulsif d'aéronef comprenant un inverseur de poussée tel que décrit dans le présent document.

Selon un autre aspect, l'invention concerne un procédé de démontage d'un tel ensemble propulsif d'aéronef pour réaliser une opération de maintenance sur le moteur nécessitant sa dépose de l'aéronef.

Ce procédé de démontage comprend :
- une disposition des demi-capots dans la position de maintenance ;
- un retrait des moyens de fixation de sorte que les rails de grilles soient mobiles par rapport au moteur ;
- une translation des rails de grilles par rapport aux grilles de déviation de manière à placer les rails de grilles dans une position avancée permettant une extraction d'un sous-ensemble sans collision des rails de grilles avec les demi-capots, ledit sous-ensemble comportant le moteur, les rails de grilles et les grilles de déviation, la position avancée des rails de grilles étant définie relativement au moteur et aux grilles de déviation ;
- une extraction dudit sous-ensemble par translation verticale de celui-ci relativement aux demi-capots.

Dans des modes de réalisation dans lesquels l'inverseur de poussée comprend une bielle reliant les rails de grilles entre eux en une extrémité des rails de grilles recevant les grilles de déviation en position d'inversion de poussée, le procédé peut comprendre, avant le retrait desdits moyens de fixation, le démontage de cette bielle.

Un tel procédé permet d'extraire le moteur, les grilles de déviation et les rails de grilles sans faire entrer en collision les rails de grilles avec les demi-capots.

Dans un mode de réalisation, le procédé de démontage peut comprendre, avant l'étape d'extraction dudit sous-ensemble, une fixation des grilles de déviation et/ou des rails de grilles sur un composant solidaire du moteur. Par exemple, ce composant peut être le carter de soufflante.

Une telle étape de fixation permet de maintenir les grilles de déviation et/ou les rails de grilles solidaires du moteur lors de son extraction et de son transport.

Par exemple, cette étape de fixation peut consister à fixer les grilles de déviation sur ledit composant solidaire du moteur avant l'étape de translation des rails de grilles. Une telle solidarisation des grilles de déviation et du moteur peut faciliter l'étape de translation des rails de grilles par rapport aux grilles de déviation.

Dans un mode de réalisation, après fixation des grilles de déviation sur ledit composant solidaire du moteur puis translation des rails de grilles, on peut fixer les rails de grilles translatés, de préférence dans la position avancée, audit composant solidaire du moteur ou à un autre composant solidaire du moteur ou encore aux grilles de déviation. Une telle fixation des rails de grilles peut faciliter l'extraction, le transport et le stockage du sous-ensemble comprenant le moteur, les rails de grilles et les grilles de déviation. Alternativement, après fixation des grilles de déviation sur ledit composant solidaire du moteur puis translation des rails de grilles, les rails de grilles peuvent être retirés des grilles de déviation. Dans ce cas, lors de l'étape de translation des rails de grilles, ceux-ci sont translatés par rapport aux grilles de déviation jusqu'à séparation d'avec les grilles de déviation.

L'invention concerne aussi un procédé de montage ou de remontage d'un ensemble propulsif d'aéronef.

Ce procédé de montage ou de remontage comprend :
- une disposition des demi-capots dans la position de maintenance ;
- un positionnement des rails de grilles par rapport aux grilles de déviation dans une position avancée permettant une insertion d'un sous-ensemble sans collision des rails de grilles avec les demi-capots, ledit sous-ensemble comportant le moteur, les rails de grilles et les grilles de déviation, la position avancée des rails de grilles étant définie relativement au moteur et aux grilles de déviation ;
- une insertion dudit sous-ensemble par translation verticale de celui-ci relativement aux demi-capots ;
- une translation des rails de grilles par rapport aux grilles de déviation de manière à placer les rails de grilles dans une position de fixation dans laquelle les rails de grilles peuvent être reliés au moteur par lesdits moyens de fixation, la position de fixation des rails de grilles étant définie relativement au moteur et aux grilles de déviation ;
- un assemblage des moyens de fixation de manière à relier l'un au moins des rails de grilles au moteur par encastrement.

Dans des modes de réalisation dans lesquels l'inverseur de poussée comprend une bielle reliant les rails de grilles entre eux en une extrémité des rails de grilles recevant les grilles de déviation en position d'inversion de poussée, le procédé de montage ou de remontage peut comprendre, après assemblage desdits moyens de fixation, le montage de cette bielle.

D'autres caractéristiques et avantages de l'invention apparaîtront à la lecture de la description nullement limitative qui suit et des figures annexées, dans lesquelles :
- La figure 1 est une vue schématique en perspective d'un ensemble propulsif selon l'invention, avec inverseur de poussée à grilles mobiles en position de croisière ;
- La figure 2 est une vue schématique en perspective de l'ensemble propulsif de la figure 1, avec inverseur de poussée en position d'inversion de poussée ;
- La figure 3 est une vue schématique en perspective de l'ensemble propulsif de la figure 1, avec capot mobile en position de maintenance et carénage du mât réacteur déposé ;
- La figure 4 est une vue schématique en perspective de l'ensemble propulsif de la figure 1, avec capot mobile en position de maintenance et plusieurs éléments de carénage déposés ;
- Les figures 5 à 11 sont des vues schématiques en perspective de parties de l'ensemble propulsif de la figure 1, faisant apparaître des éléments de l'inverseur de poussée :
   ∘ Les figures 5 et 6 montrent des grilles de déviation en position de croisière,
   ∘ La figure 7 montre les grilles de déviation en position d'inversion de poussée,
   ∘ Les figures 8 et 10 illustrent une position de fixation de rails de grilles,
   ∘ Les figures 9 et 11 illustrent une position avancée des rails de grilles ;

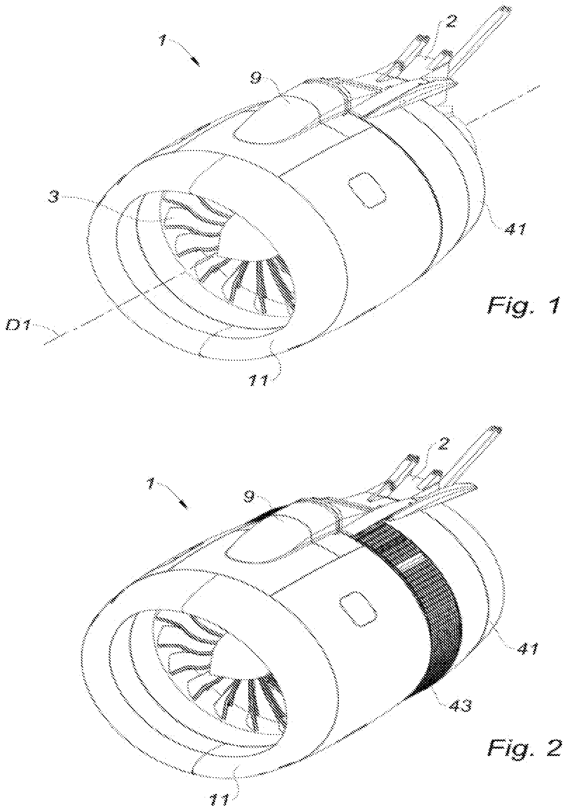

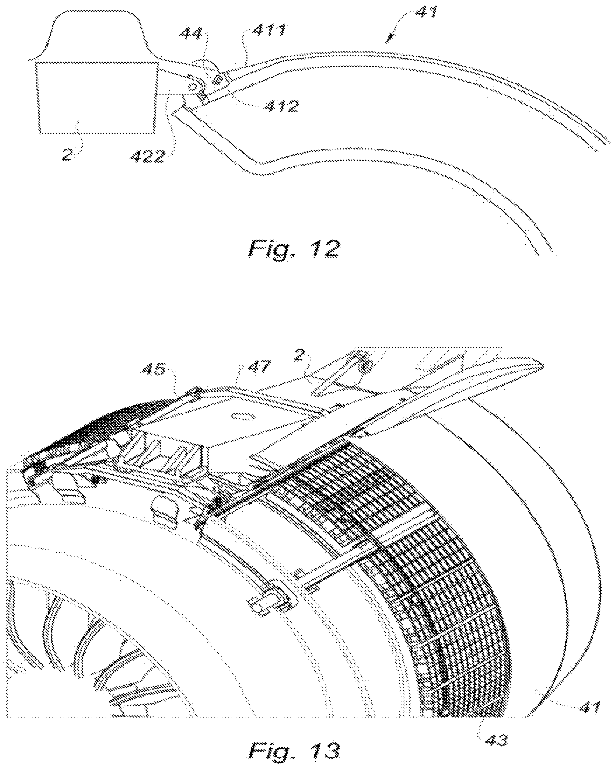

- La figure 12 est une vue schématique de face de l'ensemble propulsif de la figure 1, avec capot mobile en position de maintenance ;
- La figure 13 est une vue schématique en perspective de parties de l'ensemble propulsif de la figure 1, faisant apparaître des rails de grilles en position de fixation.

Les éléments identiques ou similaires sont repérés par des signes de référence identiques sur l'ensemble des figures.

L'invention se rapporte au domaine des ensembles propulsifs d'aéronef.

Un ensemble propulsif d'avion est illustré à la figure 1. Cet ensemble propulsif comprend une nacelle 1, un mât réacteur 2 et un moteur de type turboréacteur (non représenté) logé dans la nacelle 1. Le mât réacteur 2, partiellement représenté, est destiné à être fixé à une aile (non représentée) de l'avion.

La nacelle 1 comprend une entrée d'air 11 adaptée pour permettre la captation optimale vers le turboréacteur de l'air nécessaire à l'alimentation d'une soufflante 3 et de compresseurs internes (non représentés) du turboréacteur.

Dans ce qui suit, le moteur peut être un turboréacteur d'un tel ensemble propulsif.

La nacelle 1 s'étend suivant une direction D1 passant par l'axe du moteur.

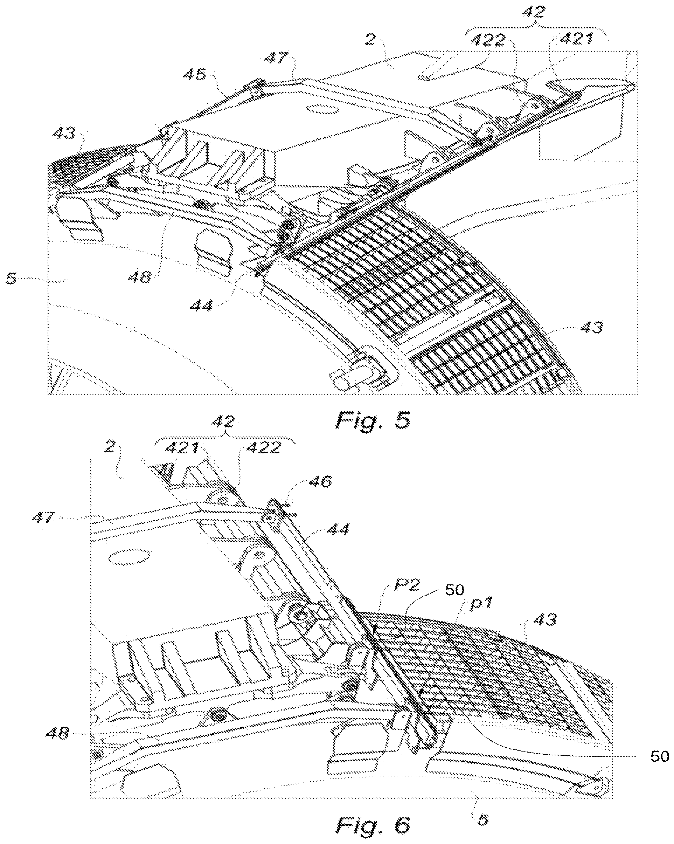

En référence aux figures 1 à 7, la nacelle 1 comporte un inverseur de poussée comprenant :
- un capot mobile comportant deux demi-capots : un seul demi-capot 41 est illustré sur les figures 1 à 4 ;
- deux poutres : une seule poutre 42 est illustrée sur les figures 5 à 7 ;
- des grilles 43 de déviation,
- des rails 44 et 45 de grilles. Dans cet exemple, les rails 44 et 45 de grilles sont situés de part et d'autre du mât réacteur 2 lorsque l'inverseur de poussée est assemblé dans l'ensemble propulsif.

Chaque poutre 42 comprend un rail de poutre 421 et des charnières 422.

Les demi-capots 41 sont respectivement reliés aux rails de poutre 421 suivant une liaison glissière autorisant une translation des demi-capots 41, relativement aux poutres 42, entre une position de croisière et une position d'inversion de poussée. La position de croisière des demi-capots 41 est illustrée à la figure 1. La position d'inversion de poussée des demi-capots 41 est illustrée à la figure 2.

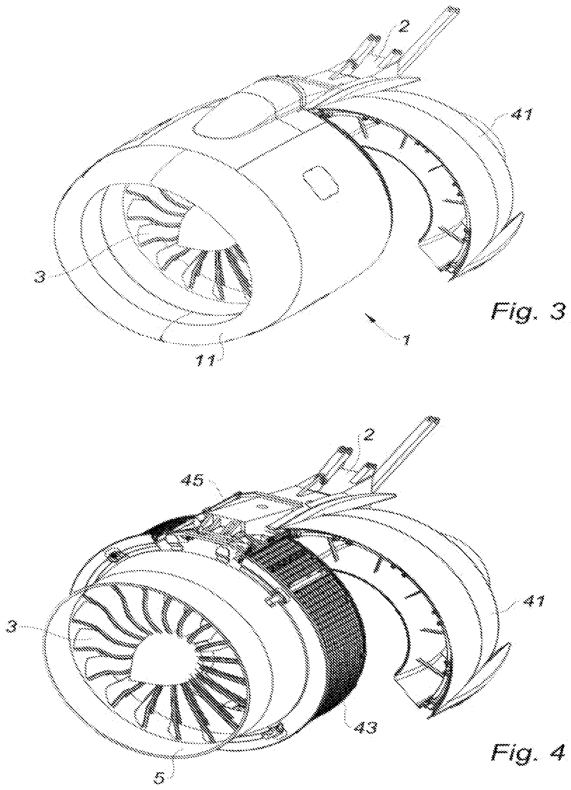

Les poutres 42 sont agencées pour être reliées par leurs charnières 422 respectives au mât réacteur 2 suivant une liaison pivot. Dans cet exemple, cette liaison pivot a un axe parallèle ou sensiblement parallèle à la direction D1. Cette liaison pivot est agencée pour autoriser une rotation des rails de poutre 421 et des demi-capots 41 correspondants entre une position fermée et une position de maintenance dans laquelle les demi-capots sont ouverts. La position fermée des demi-capots 41 est illustrée à la figure 1. La position de maintenance des demi-capots 41 est illustrée à la figure 3 et 4.

En référence aux figures 5 à 7, les grilles 43 de déviation sont reliées aux rails 44 et 45 de grilles suivant une liaison glissière autorisant une translation des grilles 43 de déviation entre une position de croisière et une position d'inversion de poussée.

La position de croisière et la position d'inversion de poussée des grilles 43 de déviation sont définies relativement aux poutres 42, ces poutres 42 étant solidaires du mât réacteur 2 en translation suivant la direction D1.

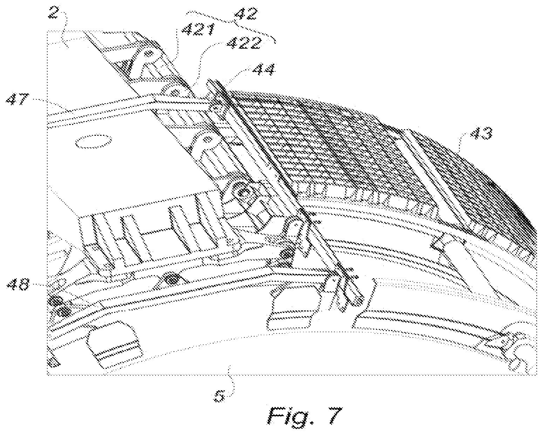

La position de croisière des grilles 43 de déviation est illustrée aux figures 4 à 6. La position d'inversion de poussée des grilles 43 de déviation est illustrée à la figure 2 et à la figure 7.

L'inverseur de poussée comprend aussi des moyens de fixation 46 et 50 amovibles qui peuvent comprendre ou consister en des systèmes de type vis-écrou, par exemple avec écrou autobloquant.

Les moyens de fixation visés par la référence 46 à la figure 6 sont utilisés pour relier la bielle 47 au rail 44 de grilles (voir ci-dessous) et sont ici appelées « moyens de fixation de bielle ».

L'inverseur de poussée comprend des moyens de fixation 50 agencés pour relier de manière amovible l'un au moins des rails 44 et 45 de grilles au moteur par encastrement. Ces moyens de fixation 50 agencés pour relier de manière amovible l'un au moins des rails 44 et 45 de grilles au moteur sont similaires aux moyens de fixation de bielle visés par la référence 46 à la figure 6.

Dans cet exemple, les moyens de fixation 50 sont agencés pour relier le rail 44 de grilles au moteur, d'une part en une partie centrale P2 de ce rail 44, et d'autre part en une extrémité P1 de ce rail 44 (figure 6). De manière similaire, les moyens de fixation 50 sont agencés pour relier le rail 45 de grilles au moteur à la fois en une partie centrale du rail 45 et en une extrémité de ce rail 45.

Ainsi, dans l'exemple des figures 5 et 6, les moyens de fixation 50 relient de manière amovible les deux rails 44 et 45 de grilles au moteur par encastrement.

La liaison d'un ou plusieurs rails de grilles au moteur peut être réalisée par encastrement sur un carter de soufflante 5 de l'ensemble propulsif. Les figures 5 à 7 illustrent une liaison par encastrement au carter de soufflante 5 à la fois des rails 44 et 45 en l'une de leur extrémité P1 (située au niveau de la bielle 48) et en leur partie centrale P2 (voir figure 6).

Dans cet exemple, l'inverseur de poussée comprend deux bielles 47 et 48 agencées pour relier les rails 44 et 45 de grilles entre eux de manière à reprendre des efforts mécaniques exercés sur ces rails par les grilles 43 de déviation, en particulier les efforts exercés dans une direction normale, ou sensiblement normale, aux rails 44 et 45 de grilles, cette direction étant perpendiculaire ou sensiblement perpendiculaire à la direction D1.

Dans cet exemple, chacune des bielles 47 et 48 est reliée aux rails 44 et 45 de grilles par encastrement à l'aide de moyens de fixation 46 de bielle.

La bielle 47 relie une première extrémité des rails 44 et 45 de grilles, cette première extrémité recevant les grilles 43 de déviation lorsque celles-ci sont en position d'inversion de poussée. La bielle 48 relie une deuxième extrémité des rails 44 et 45 de grilles, cette deuxième extrémité recevant les grilles 43 de déviation lorsque celles-ci sont en position de croisière.

La liaison entre chaque bielle et chaque rail de grilles peut comprendre un ou plusieurs degrés de liberté afin de faciliter le montage et/ou éviter les inconvénients d'un assemblage hyperstatique. Dans des exemples non limitatifs de réalisation :
- la liaison entre la bielle 48 et les rails 44 et 45 de grilles peut être une liaison rotule (non représentée), ou
- la bielle 47 peut être reliée aux rails 44 et 45 suivant une liaison rotule et la bielle 48 aux rails 44 et 45 par encastrement.

Dans un mode de réalisation non représenté, une bielle de maintien peut relier le carter de soufflante 5 aux rails 44 et 45 de grilles sensiblement en leur milieu (au niveau de la référence P2 à la figure 6), cette bielle de maintien pouvant s'étendre suivant une direction sensiblement normale à la surface du carter de soufflante 5.

L'invention propose un procédé de démontage d'un tel ensemble propulsif d'aéronef pour réaliser une opération de maintenance sur le moteur nécessitant sa dépose de l'avion.

Selon ce procédé, on dispose les demi-capots 41 dans la position de maintenance (figure 3).

On retire ensuite les moyens de fixation 46 de bielle pour retirer la bielle 47.

On retire ensuite les moyens de fixation 50 agencés pour relier de manière amovible les rails 44 et 45 de grilles au moteur, de sorte que les rails 44 et 45 de grilles soient mobiles par rapport au moteur.

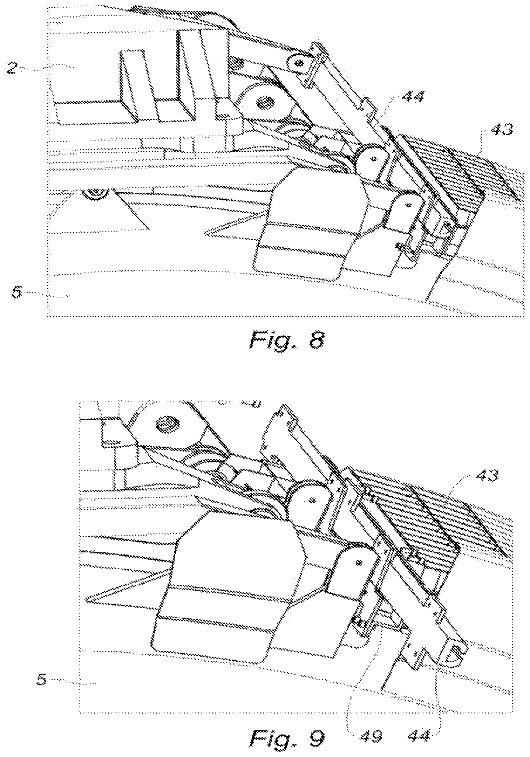

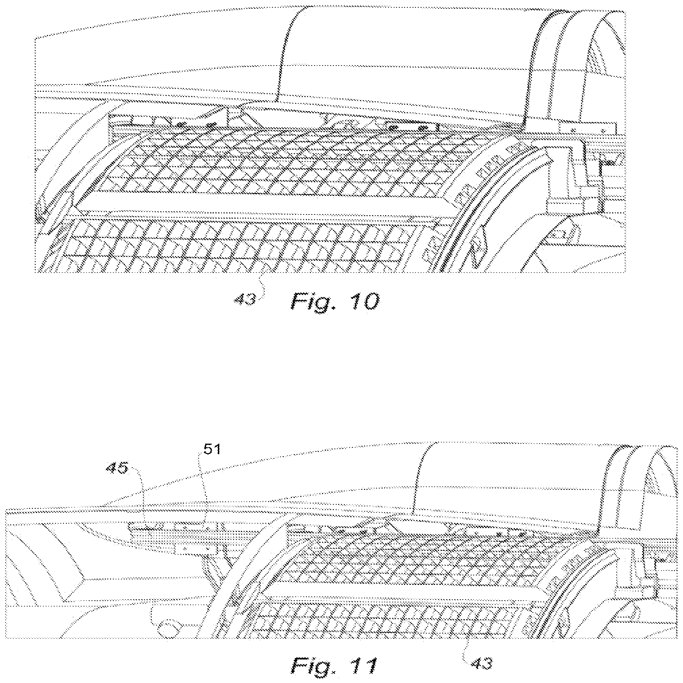

Une étape suivante consiste à translater les rails 44 et 45 de grilles par rapport aux grilles 43 de déviation de manière à placer les rails 44 et 45 dans une position avancée. La position avancée des rails 44 et 45 de grilles est définie relativement au moteur et aux grilles 43 de déviation. La position initiale du rail 44 de grilles, c'est-à-dire avant réalisation de cette étape de translation, est illustrée à la figure 8 (la figure 10 représente aussi l'ensemble propulsif avec les rails de grilles en position initiale). La position avancée des rails 44 et 45 de grilles, c'est-à-dire après réalisation de cette étape de translation, est illustrée aux figures 9 et 11.

Cette étape de translation et en particulier le positionnement des rails 44 et 45 de grilles dans la position avancée permet une extraction du moteur, des rails 44 et 45 de grilles et des grilles 43 de déviation sans collision des rails 44 et 45 avec les demi-capots 41.

Lorsque les rails 44 et 45 de grilles sont en position avancée, on peut ensuite extraire un sous-ensemble comprenant le moteur, les rails 44 et 45 de grilles et les grilles 43 de déviation.

Cette extraction est réalisée par translation verticale, ou comprenant une composante verticale, du sous-ensemble relativement aux demi-capots 41.

La position avancée des rails 44 et 45 de grilles permet d'extraire ledit sous-ensemble sans faire entrer en collision les rails 44 et 45 de grilles avec les demi-capots 41. En effet, comme cela ressort de la figure 12, lorsque l'inverseur de poussée est assemblé avec l'ensemble propulsif, les rails 44 et 45 de grilles sont situés radialement entre une paroi externe 411 et une paroi interne 412 des demi-capots 41. Sans positionner les rails 44 et 45 de grilles dans la position avancée, ceux-ci entreraient en collision avec la paroi interne 412 des demi-capots 41 lors de l'étape d'extraction.

Optionnellement, avant l'étape d'extraction dudit sous-ensemble, on peut fixer les grilles 43 de déviation et/ou les rails 44 et 45 de grilles sur un composant solidaire du moteur. Par exemple, ce composant peut être le carter de soufflante 5 de l'ensemble propulsif.

Par exemple, pour fixer les grilles 43 au le carter de soufflante 5, des équerres 49 telles que celle illustrée à la figure 9 peuvent être utilisées.

Le remontage du moteur et plus généralement du sous-ensemble avec l'ensemble propulsif peut suivre les étapes inverses.

Par exemple, si les demi-capots 41 ne sont pas ou plus dans la position de maintenance, on dispose ceux-ci dans cette position de maintenance.

De même, si les rails 44 et 45 de grilles ne sont pas ou plus dans la position avancée, on les positionne dans cette position avancée de manière à permettre une insertion dudit sous-ensemble sans collision des rails 44 et 45 de grilles avec les demi-capots 41.

Le sous-ensemble peut ensuite être inséré par translation verticale, ou comprenant une composante verticale, de celui-ci relativement aux demi-capots 41.

Le cas échéant, on ôte les fixations des grilles 43 de déviation et/ou des rails 44 et 45 de grilles reliant ceux-ci sur ledit composant solidaire du moteur.

On translate ensuite les rails 44 et 45 de grilles par rapport aux grilles 43 de déviation de manière à placer les rails de grilles dans une position de fixation dans laquelle ils peuvent être reliés au moteur par les moyens de fixation 50 agencés pour relier de manière amovible les rails 44 et 45 de grilles au moteur. La position de fixation des rails 44 et 45 de grilles est définie relativement au moteur et aux grilles 43 de déviation.

Lesdits moyens de fixation 50 peuvent alors être assemblés de manière à relier les rails 44 et 45 de grilles au moteur.

La bielle 47 peut ensuite être montée à l'aide des moyens de fixation 46 de bielle.

Il ressort de la description qui précède que l'inverseur de poussée est agencé de sorte que, lorsque les moyens de fixation 46 de bielle et les moyens de fixation 50 agencés pour relier de manière amovible les rails 44 et 45 de grilles au moteur sont retirés, ladite liaison glissière reliant les grilles 43 de déviation et les rails 44 et 45 de grilles autorise une translation des rails 44 et 45 de grilles, relativement aux grilles 43 de déviation et aux poutres 42, entre une position de fixation et une position avancée.

Lorsque les rails 44 et 45 de grilles sont dans la position de fixation (figure 8), les rails 44 et 45 de grilles peuvent être reliés au moteur par les moyens de fixation 50 agencés pour relier de manière amovible les rails 44 et 45 de grilles au moteur.

Afin de s'assurer que l'opérateur a bien positionné les rails 44 et 45 de grilles, l'inverseur de poussée peut comprendre des détrompeurs 51 (voir figure 11) reliés à un rail de grilles respectif et agencés pour interférer avec un composant 9 de l'ensemble propulsif de manière à empêcher l'assemblage de ce composant 9 avec l'ensemble propulsif lorsque l'un au moins des rails 44 et/ou 45 de grilles est dans la position avancée. Ledit composant 9 de l'ensemble propulsif peut être un carénage du mât réacteur (voir figure 1) ou du carter de soufflante 5.

Bien entendu, l'invention n'est pas limitée aux exemples qui viennent d'être décrits et de nombreux aménagements peuvent être apportés à ces exemples sans sortir du cadre de l'invention tel que défini dans les revendications.

## Revendications

1. Inverseur de poussée pour ensemble propulsif d'aéronef à moteur, l'inverseur de poussée comprenant :
- deux poutres (42) comprenant chacune un rail (421) de poutre et des charnières (422),
- deux demi-capots (41) respectivement reliés aux rails (421) de poutre suivant une liaison glissière autorisant une translation des demi-capots (41), relativement aux poutres (42), entre une position de croisière et une position d'inversion de poussée, les poutres (42) étant agencées pour être reliées par leurs charnières (422) respectives à un mât réacteur (2) de l'ensemble propulsif suivant une liaison pivot autorisant une rotation des rails (421) de poutre et des demi-capots (41) correspondants entre une position fermée et une position de maintenance dans laquelle les demi-capots (41) sont ouverts,
- des grilles (43) de déviation et des rails (44, 45) de grilles, les grilles (43) de déviation étant reliées aux rails (44, 45) de grilles suivant une liaison glissière autorisant une translation des grilles (43) de déviation entre une position de croisière et une position d'inversion de poussée, la position de croisière et la position d'inversion de poussée des grilles (43) de déviation étant définies relativement aux poutres (42),
- des moyens de fixation (50) amovibles agencés pour relier de manière amovible l'un au moins des rails (44, 45) de grilles au moteur par encastrement,
cet inverseur de poussée étant agencé de sorte que, lorsque les moyens de fixation (50) sont retirés, ladite liaison glissière reliant les grilles (43) de déviation et les rails (44, 45) de grilles autorise une translation des rails (44, 45) de grilles, relativement aux grilles (43) de déviation et aux poutres (42), entre une position de fixation et une position avancée, les rails (44, 45) de grilles pouvant être reliés au moteur par les moyens de fixation (50) lorsque les rails (44, 45) de grilles sont dans la position de fixation.

2. Inverseur de poussée selon la revendication 1, comprenant en outre un ou plusieurs détrompeurs (51) reliés à un rail (44, 45) de grilles respectif et agencés pour interférer avec un composant (9) de l'ensemble propulsif de manière à empêcher l'assemblage de ce composant (9) avec l'ensemble propulsif lorsque l'un au moins des rails (44, 45) de grilles est dans la position avancée.

3. Inverseur de poussée selon la revendication 1 ou 2, comprenant au moins une bielle (47, 48) agencée pour relier les rails (44, 45) de grilles entre eux de manière à reprendre des efforts mécaniques exercés sur les rails (44, 45) de grilles par les grilles (43) de déviation dans une direction normale aux rails (44, 45) de grilles, et des moyens de fixation (46) de bielle amovibles agencés pour relier ladite bielle (47, 48) aux rails (44, 45) de grilles.

4. Inverseur de poussée selon la revendication 3, dans lequel les moyens de fixation (46) de bielle sont des moyens de liaison rotule.

5. Ensemble propulsif d'aéronef, **caractérisé en ce qu'**il comprend un inverseur de poussée selon l'une quelconque des revendications 1 à 4.

6. Procédé de démontage d'un ensemble propulsif d'aéronef selon la revendication 5, pour réaliser une opération de maintenance sur le moteur nécessitant sa dépose de l'aéronef, comprenant :
- une disposition des demi-capots (41) dans la position de maintenance ;
- un retrait des moyens de fixation (46, 50) de sorte que les rails (44, 45) de grilles soient mobiles par rapport au moteur;
- une translation des rails (44, 45) de grilles par rapport aux grilles (43) de déviation de manière à placer les rails (44, 45) de grilles dans une position avancée permettant une extraction d'un sous-ensemble sans collision des rails (44, 45) de grilles avec les demi-capots (41), ledit sous-ensemble comportant le moteur, les rails (44, 45) de grilles et les grilles (43) de déviation, la position avancée des rails (44, 45) de grilles étant définie relativement au moteur et aux grilles (43) de déviation ;
- une extraction dudit sous-ensemble par translation verticale de celui-ci relativement aux demi-capots (41).

7. Procédé de démontage selon la revendication 6, comprenant, avant l'étape d'extraction dudit sous-ensemble, une fixation des grilles (43) de déviation et/ou des rails (44, 45) de grilles sur un composant (5) solidaire du moteur.

8. Procédé de montage ou de remontage d'un ensemble propulsif d'aéronef selon la revendication 5, comprenant :
- une disposition des demi-capots (41) dans la position de maintenance ;
- un positionnement des rails (44, 45) de grilles par rapport aux grilles (43) de déviation dans une position avancée permettant une insertion d'un sous-ensemble sans collision des rails (44, 45) de grilles avec les demi-capots (41), ledit sous-ensemble comportant le moteur, les rails (44, 45) de grilles et les grilles (43) de déviation, la position avancée des rails (44, 45) de grilles étant définie relativement au moteur et aux grilles (43) de déviation ;
- une insertion dudit sous-ensemble par translation verticale de celui-ci relativement aux demi-capots (41) ;
- une translation des rails (44, 45) de grilles par rapport aux grilles (43) de déviation de manière à placer les rails (44, 45) de grilles dans une position de fixation dans laquelle les rails (44, 45) de grilles peuvent être reliés au moteur par lesdits moyens de fixation (50), la position de fixation des rails (44, 45) de grilles étant définie relativement au moteur et aux grilles (43) de déviation ;
- un assemblage des moyens de fixation (50) de manière à relier l'un au moins des rails (44, 45) de grilles au moteur par encastrement.

## Patentansprüche

1. Schubumkehr für ein Flugzeugtriebwerk mit Motor, wobei die Schubumkehr umfasst:
- zwei Balken (42), die jeweils eine Balkenschiene (421) und Scharniere (422) umfassen,
- zwei Haubenhälften (41), die jeweils mit den Balkenschienen (421) gemäß einer Gleitverbindung verbunden sind, die eine Translation der Haubenhälften (41) relativ zu den Balken (42) zwischen einer Flugposition und einer Schubumkehrposition gestatten, wobei die Balken (42) eingerichtet sind, um durch ihre jeweiligen Scharniere (422) mit einem Reaktormast (2) des Triebwerks gemäß einer Schwenkverbindung verbunden zu sein, die eine Rotation der Balkenschienen (421) und der entsprechenden Haubenhälften (41) zwischen einer geschlossenen Position und einer Wartungsposition, in der die Haubenhälften (41) geöffnet sind, gestattet,
- Umleitungsgitter (43) und Gitterschienen (44, 45), wobei die Umleitungsgitter (43) mit den Gitterschienen (44, 45) gemäß einer Gleitverbindung verbunden sind, die eine Translation der Umleitungsgitter (43) zwischen einer Flugposition und einer Schubumkehrposition gestattet, wobei die Flugposition und die Schubumkehrposition der Umleitungsgitter (43) relativ zu den Balken (42) definiert ist,
- lösbare Befestigungsmittel (50), die eingerichtet sind, um mindestens eine der Gitterschienen (44, 45) mit dem Motor durch Rasten lösbar zu verbinden,
wobei diese Schubumkehr derart eingerichtet ist, dass, wenn die Befestigungsmittel (50) zurückgezogen sind, die Gleitverbindung, die die Umleitungsgitter (43) und die Gitterschienen (44, 45) verbindet, eine Translation der Gitterschienen (44, 45) relativ zu den Umleitungsgittern (43) und zu den Balken (42) zwischen einer Befestigungsposition und einer vorgeschobenen Position gestattet, wobei die Gitterschienen (44, 45) mit dem Motor durch die Befestigungsmittel (50) verbunden sein können, wenn die Gitterschienen (44, 45) in der Befestigungsposition sind.

2. Schubumkehr nach Anspruch 1, umfassend ferner einen oder mehrere Unverwechselbarkeitseinrichtungen (51), die mit einer jeweiligen Gitterschiene (44, 45) verbunden und eingerichtet sind, um mit einem Bauteil (9) des Triebwerks derart zu interferieren, dass die Verbindung dieses Bauteils (9) mit dem Triebwerk verhindert wird, wenn mindestens eine der Gitterschienen (44, 45) in der vorgeschobenen Position ist.

3. Schubumkehr nach Anspruch 1 oder 2, umfassend mindestens eine Pleuelstange (47, 48), die eingerichtet ist, um die Gitterschienen (44, 45) miteinander derart zu verbinden, dass mechanische Kräfte, die auf die Gitterschienen (44, 45) ausgeübt werden, von den Umleitungsgittern (43) in einer zu den Gitterschienen (44, 45) normalen Richtung übernommen werden, und lösbare des Pleuelstangen-Befestigungsmittel (46), die eingerichtet sind, um die Pleuelstange (47, 48) mit den Gitterschienen (44, 45) zu verbinden.

4. Schubumkehr nach Anspruch 3, wobei die Pleuelstangen-Befestigungsmittel (46) Kugelgelenk-Verbindungsmittel sind.

5. Flugzeugtriebwerk, **dadurch gekennzeichnet, dass** es eine Schubumkehr nach einem der Ansprüche 1 bis 4 umfasst.

6. Verfahren zur Demontage eines Flugzeugtriebwerks nach Anspruch 5 für die Durchführung einer Wartungsmaßnahme am Motor, für die dessen Demontage vom Flugzeug notwendig ist, umfassend:
- ein Anordnen der Haubenhälften (41) in der Wartungsposition;
- ein Entfernen der Befestigungsmittel (46, 50) derart, dass die Gitterschienen (44, 45) im Verhältnis zum Motor beweglich sind;
- eine Translation der Gitterschienen (44, 45) im Verhältnis zu den Umleitungsgittern (43) derart, dass die Gitterschienen (44, 45) in eine vorgeschobene Position platziert werden, die ein Entfernen einer Unterbaugruppe ohne Kollision der Gitterschienen (44, 45) mit den Haubenhälften (41) erlaubt, wobei die Unterbaugruppe den Motor, die Gitterschienen (44, 45) und die Umleitungsgitter (43) umfasst, wobei die vorgeschobene Position der Gitterschienen (44, 45) relativ zum Motor und zu den Umleitungsgittern (43) definiert ist;
- ein Entfernen der Unterbaugruppe durch vertikale Translation derselben relativ zu den Haubenhälften (41).

7. Demontageverfahren nach Anspruch 6, umfassend, vor dem Schritt des Entfernens der Unterbaugruppe, eine Befestigung der Umleitungsgitter (43) und/oder der Gitterschienen (44, 45) auf einem mit dem Motor fest verbundenen Bauteil (5).

8. Verfahren zur Montage oder erneuten Montage eines Flugzeugtriebwerks nach Anspruch 5, umfassend:
- ein Anordnen der Haubenhälften (41) in der Wartungsposition;
- ein Positionieren der Gitterschienen (44, 45) im Verhältnis zu den Umleitungsgittern (43) in einer vorgeschobenen Position, was ein Einsetzen einer Unterbaugruppe ohne Kollision der Gitterschienen (44, 45) mit den Haubenhälften (41) erlaubt, wobei die Unterbaugruppe den Motor, die Gitterschienen (44, 45) und die Umleitungsgitter (43) umfasst, wobei die vorgeschobene Position der Gitterschienen (44, 45) relativ zum Motor und zu den Umleitungsgittern (43) definiert ist;
- ein Einsetzen der Unterbaugruppe durch vertikale Translation derselben relativ zu den Haubenhälften (41);
- eine Translation der Gitterschienen (44, 45) im Verhältnis zu den Umleitungsgittern (43) derart, dass die Gitterschienen (44, 45) in eine Befestigungsposition platziert werden, in der die Gitterschienen (44, 45) durch die Befestigungsmittel (50) mit dem Motor verbunden werden können, wobei die Befestigungsposition der Gitterschienen (44, 45) relativ zum Motor und zu den Umleitungsgittern (43) definiert ist;
- ein Verbinden der Befestigungsmittel (50) derart, dass mindestens eine der Gitterschienen (44, 45) mit dem Motor durch Rasten verbunden wird.

## Claims

1. A thrust reverser for a propulsion unit of an engine aircraft, the thrust reverser comprising:
- two beams (42) each comprising a beam rail (421) and hinges (422),
- two half-cowls (41) respectively connected to the beam rails (421) in a sliding connection authorizing a translation of the half-cowls (41), relative to the beams (42), between a cruise position and a thrust reversal position, the beams (42) being arranged to be connected by their respective hinges (422) to an engine pylon (2) of the propulsion unit according to a pivot connection authorizing a rotation of the beam rails (421) and corresponding half-cowls (41) between a closed position and a maintenance position in which the half-cowls (41) are open,
- cascades vane (43) and cascade rails (44, 45), the cascades vane (43) being connected to the cascade rails (44, 45) in a sliding connection allowing a translation of the cascades vane (43) between a cruise position and a thrust reversal position, the cruise position and the thrust reversal position of the cascades vane (43) being defined relative to the beams (42),
- removable fixing means (50) arranged to removably connect at least one of the cascade rails (44, 45) to the engine by embedding,
this thrust reverser being arranged so that, when the fixing means (50) are withdrawn, said sliding connection connecting the cascades vane (43) and the cascade rails (44, 45) authorizes a translation of the cascade rails (44, 45), relative to the cascades vane (43) and to the beams (42), between a fixing position and an advanced position, the cascade rails (44, 45) being able to be connected to the engine by the fixing means (50) when the cascade rails (44, 45) are in the fixing position.

2. The thrust reverser according to claim 1, further comprising one or more keying devices (51) connected to a respective cascade rail (44, 45) and arranged to interfere with a component (9) of the propulsion unit so as to prevent the assembly of this component (9) with the propulsion unit when at least one of the cascade rails (44, 45) is in the advanced position.

3. The thrust reverser according to claim 1 or 2, comprising at least one connecting rod (47, 48) arranged to connect the cascade rails (44, 45) together so as to take up the mechanical forces exerted on the cascade rails (44, 45) by the cascades vane (43) in a direction normal to the cascade rails (44, 45), and removable means (46) for fixing the connecting rod arranged to connect said connecting rod (47, 48) to the cascade rails ( 44, 45).

4. The thrust reverser according to claim 3, wherein the means (46) for fixing the connecting rod are ball-joint connection means.

5. An aircraft propulsion unit, **characterized in that** it comprises a thrust reverser according to any one of claims 1 to 4.

6. A method for dismounting an aircraft propulsion unit according to claim 5, for carrying out a maintenance operation on the engine requiring its removal from the aircraft, comprising:
- an arrangement of the half-cowls (41) in the maintenance position;
- withdrawal of the fixing means (46, 50) so that the cascade rails (44, 45) are movable relative to the engine;
- a translation of the cascade rails (44, 45) relative to the cascades vane (43) so as to place the cascade rails (44, 45) in an advanced position allowing an extraction of a sub-assembly without collision of the cascade rails (44, 45) with the half-cowls (41), said sub-assembly including the engine, the cascade rails (44, 45) and the cascades vane (43), the advanced position of the cascade rails (44, 45) being defined relative to the engine and the cascades vane (43);
- an extraction of said sub-assembly by vertical translation thereof relative to the half-cowls (41).

7. The dismounting method according to claim 6, comprising, before the step of extracting said sub-assembly, a fixing of the cascades vane (43) and/or cascade rails (44, 45) on a component (5) secured to the engine.

8. A method for mounting or remounting an aircraft propulsion unit according to claim 5, comprising:
- an arrangement of the half-cowls (41) in the maintenance position;
- a positioning of the cascade rails (44, 45) relative to the cascades vane (43) in an advanced position allowing an insertion of a sub-assembly without collision of the cascade rails (44, 45) with the half-cowls (41), said subassembly including the engine, the cascade rails (44, 45) and the cascades vane (43), the advanced position of the cascade rails (44, 45) being defined relative to the engine and the cascades vane (43);
- an insertion of said sub-assembly by vertical translation thereof relative to the half-cowls (41);
- a translation of the cascade rails (44, 45) relative to the cascades vane (43) so as to place the cascade rails (44, 45) in a fixing position in which the cascade rails (44, 45) can be connected to the engine by said fixing means (50), the fixing position of the cascade rails (44, 45) being defined relative to the engine and the cascades vane (43);
- an assembly of the fixing means (50) so as to connect at least one of the cascade rails (44, 45) to the engine by embedding.
